# EUROPÄISCHE PATENTANMELDUNG

(11) **EP 4 696 282 A1**
(43) Veröffentlichungstag der Anmeldung: **18.02.2026**
(21) Anmeldenummer: 24194279.6
(22) Anmeldetag: 13.08.2024
(51) Int. Cl.: A61C 13/00

(54) **FRÄSKOPF FÜR EINE FRÄSMASCHINE**

(71) Anmelder: Ivoclar Vivadent AG, 9494 Schaan (LI)
(72) Erfinder: Gassner, Sebastian, 9497 Triesenberg (LI); Matt, Lukas, 9493 Mauren (LI); Schmid, Fabian, 6751 Braz (AT)
(74) Vertreter: Baldus, Oliver

(57) **Zusammenfassung**

Fräskopf (100) für eine Fräsmaschine (101), mit einem Werkzeug (103) zum Fräsen eines Dentalobjektes (105); und einer Luftdüse (107) zum Erzeugen eines Luftstrahls (109), der auf oder vor eine Spitze (111) des Werkzeugs (103) gerichtet ist.

## Beschreibung

Die vorliegende Erfindung betrifft einen Fräskopf für eine Fräsmaschine und ein Verfahren zum Reinigen eines Dentalobjektes.

Beim Fräsen von ZrO2-Restaurationen bleiben Staubrückstände auf Oberflächen des gefrästen Objekts haften. Diese werden anschließend von Hand mit Druckluft abgeblasen oder mit einem Pinsel abgewischt. Diese Reinigung ist besonders in Kavitäten oder Fissuren aufwändig. Auch die Fräskammer der Fräsmaschine muss regelmäßig gereinigt werden. Da der helle Frässtaub mit bloßem Auge kaum auf dem hellen und porösen Zirkondioxid zu erkennen ist, ist es während der Reinigung schwer festzustellen, ob die Restauration bereits ausreichend gesäubert ist.

Wenn nach dem Fräsprozess zu viele Staubrückstände auf der Restauration haften bleiben, ist nach der manuellen Reinigung die Umgebung des Arbeitsplatzes schnell verschmutzt und von einer erhöhten Staubbelastung betroffen. Das wiederum kann zu einer zusätzlichen Verschmutzung der Restauration führen, die eigentlich in Vorbereitung zum Sintern gesäubert werden sollte.

Theoretisch kann die Restauration auch mit Wasser gespült werden. Dies hat jedoch einen anschließenden Trocknungsprozess zur Folge. Nachdem die Restauration gesintert ist, sind die Staubablagerungen gut erkennbar, da Staubablagerungen nach dem Sintern heller sind als die zahnfarbige Oberfläche der Restauration. Der Staubrückstand ist dann aber in die Restauration hineingebrannt, so dass diese mit einem Handstück abgeschliffen werden müssen. Lösungsansätze erfordern meist zusätzliche Bearbeitungszeit in der Fräsmaschine und zusätzliche Werkzeuge. Auch die Effektivität der Lösungsansätze ist beschränkt.

Es ist die technische Aufgabe der vorliegenden Erfindung, Staubablagerungen beim Fräsen eines Dentalobjektes zu verhindern. Das Dentalobjekt soll ohne zusätzlichen Zeiteinsatz möglichst staubfrei aus der Fräsmaschine genommen werden können.

Diese technische Aufgabe wird durch Gegenstände nach den unabhängigen Ansprüchen gelöst. Technisch vorteilhafte Ausführungsformen sind Gegenstand der abhängigen Ansprüche, der Beschreibung und der Zeichnungen.

Gemäß einem ersten Aspekt wird die technische Aufgabe durch einen Fräskopf für eine Fräsmaschine gelöst, mit einem Werkzeug zum Fräsen eines Dentalobjektes; und einer Luftdüse zum Erzeugen eines Luftstrahls, der auf oder vor eine Spitze des Werkzeugs gerichtet ist. Das Dentalobjekt wird aus einem Werkstück herausgefräst, das in einem Werkstückhalter eingespannt ist. Durch den Fräskopf wird der technische Vorteil erreicht, dass keine zusätzliche Bearbeitungszeit oder Werkzeuge benötigt werden, die Reinigungsqualität verbessert und der manuelle Reinigungsaufwand reduziert wird.

In einer technisch vorteilhaften Ausführungsform des Fräskopfes befindet sich die Luftdüse in einem Abstand zwischen 10 mm und 70 mm zur Spitze, insbesondere zwischen 20 mm und 50 mm. Dadurch wird beispielsweise der technische Vorteil erreicht, dass eine hohe Reinigungswirkung erzielt wird.

In einer weiteren technisch vorteilhaften Ausführungsform des Fräskopfes ist die Luftdüse an einer Schutzkappe angeordnet, die um die Drehspindel des Werkzeugs herum angeordnet ist. Dadurch wird beispielsweise der technische Vorteil erreicht, dass der Luftstrahl nahe an die Spitze des Werkzeugs herangeführt werden kann.

In einer weiteren technisch vorteilhaften Ausführungsform der Schutzkappe ist diese als Adapter ausgestaltet. Die Schutzkappe ist beispielsweise mittels eines Aufschrumpfens, einer Klickverbindung oder eines Adhäsives am Fräskopf befestigt. Die Schutzkappe kann auch durch Nieten oder Schrauben am Fräskopf befestigt sein.

In einer weiteren technisch vorteilhaften Ausführungsform des Verfahrens wird der Luftstrahl durch eine Luftdüse an die Spitze des Werkzeugs geführt, die an einer Schutzkappe für die Drehspindel angeordnet ist. Dadurch wird beispielsweise der technische Vorteil erreicht, dass der Luftstrahl nahe an die Spitze des Werkzeuges herangeführt werden kann.

In einer weiteren technisch vorteilhaften Ausführungsform des Fräskopfes umfasst der Fräskopf mehrere Luftdüsen zum Erzeugen eines Luftstrahls, der auf und/oder vor eine Spitze des Werkzeugs gerichtet ist. Dadurch wird beispielsweise der technische Vorteil erreicht, dass die Reinigungswirkung nochmals verbessert wird, indem durch jede der Luftdüsen ein unterschiedlicher Eintrittswinkel realisiert werden kann.

In einer weiteren technisch vorteilhaften Ausführungsform des Fräskopfes beträgt der Winkel zwischen Werkzeug und Luftstrahl weniger als 40°, insbesondere weniger als 25°, besonders bevorzugt 22°. Je kleiner der Winkel zwischen dem Werkzeug und dem Luftstrahl ist, desto besser ist die Reinigungswirkung am Dentalobjekt, insbesondere an den Vertiefungen des Dentalobjekts. Dadurch wird beispielsweise der technische Vorteil erreicht, dass der Luftstrahl auch bei unterschiedlichen Werkzeuglängen auf die Spitze des Werkzeugs trifft.

In einer weiteren technisch vorteilhaften Ausführungsform des Fräskopfes ist der Fräskopf in einer Fräskammer angeordnet. Dadurch wird beispielsweise der technische Vorteil erreicht, dass eine Ausbreitung von Frässtaub verhindert wird.

In einer weiteren technisch vorteilhaften Ausführungsform des Fräskopfes weist die Fräskammer abgerundete Ecken und/oder Kanten auf. Dadurch wird beispielsweise der technische Vorteil erreicht, dass Ablagerungen von Frässtaub innerhalb der Fräskammer reduziert werden können.

In einer weiteren technisch vorteilhaften Ausführungsform des Fräskopfes umfasst die Fräskammer zumindest eine Einlassöffnung für Luft und/oder einer Umlenkplatte (139) zum Steuern der Luft und/oder eine Auslassöffnung zum Absaugen von Luft umfasst, die an einem oder nahe zum Boden der Fräskammer angeordnet ist. Dadurch wird beispielsweise der technische Vorteil erreicht, dass der Frässtaub effizient abgeführt werden kann.

Gemäß einem zweiten Aspekt wird die technische Aufgabe durch eine Fräskammer mit einem Fräskopf nach dem ersten Aspekt gelöst. Dadurch wird beispielsweise der technische Vorteil erreicht, dass eine Ausbreitung von Frässtaub verhindert wird.

Gemäß einem dritten Aspekt wird die technische Aufgabe durch ein Verfahren zum Reinigen eines Dentalobjektes gelöst, mit den Schritten eines Fräsens eines Dentalobjektes mit einem Werkzeug; und eines Erzeugens eines Luftstrahls, der auf oder vor eine Spitze des Werkzeugs gerichtet ist. Durch das Verfahren werden die gleichen technischen Vorteile wie durch den Fräskopf nach dem ersten Aspekt erreicht.

In einer technisch vorteilhaften Ausführungsform des Verfahrens wird der Luftstrahl kontinuierlich oder pulsierend erzeugt. Dies kann während des Fräsens durchgeführt werden und/oder nach Finalisierung des Fräsprozesses. Dadurch wird beispielsweise der technische Vorteil erreicht, dass eine hohe Reinigungswirkung des Dentalobjekts erzielt wird oder ein Luftverbrauch verringert wird.

In einer weiteren technisch vorteilhaften Ausführungsform des Verfahrens wird das Dentalobjekt nach einem Beenden des Fräsens durch den Fräskopf mit aktiviertem Luftstrom abgefahren. Hierbei kann ein kontinuierlicher und/oder pulsierender Luftstrahl erzeugt und durch einen beweglichen Fräskopf über das Dentalobjekt geführt werden. Dieses Verfahren kann mit inaktivem Werkzeug durchgeführt werden. Anhand von 3D-Daten fährt der Fräskopf mit dem inaktiven Werkzeug entlang der Geometrie des Dentalobjekts. Das Dentalobjekt wird dabei durch den kontinuierlichen und/oder pulsierenden Luftstrahl abgefahren und gereinigt. Dadurch wird beispielsweise der technische Vorteil erreicht, dass eine hohe Reinigungswirkung des Dentalobjekts an den Vertiefungen, Ecken und Kanten erzielt wird.

In einer weiteren technisch vorteilhaften Ausführungsform des Verfahrens wird Luft aus einer Fräskammer abgesaugt, in der das Werkzeug angeordnet ist. Dadurch wird beispielsweise der technische Vorteil erreicht, dass der abgelagerte Frässtaub effizient beseitigt werden kann.

In einer weiteren technisch vorteilhaften Ausführungsform des Verfahrens wird Luft aus einer Fräskammer abgesaugt wird, in der das Werkzeug angeordnet ist und/oder die Luft am Boden der Fräskammer abgesaugt, in den Ecken angesaugt und/oder über die Ecken abgeführt wird. Dadurch wird beispielsweise der technische Vorteil erreicht, dass sich die Beseitigung des Frässtaubes im Fräsraum, sowie am Dentalobjekt nochmals verbessert.

In einer weiteren technisch vorteilhaften Ausführungsform des Verfahrens wird Luft zu der Fräskammer zugeführt und/oder in den Ecken ausgestoßen. Dadurch wird beispielsweise ebenfalls der technische Vorteil erreicht, dass sich die Beseitigung des Frässtaubes nochmals verbessert.

Ausführungsbeispiele der Erfindung sind in den Zeichnungen dargestellt und werden im Folgenden näher beschrieben.

Es zeigen:
- Fig. 1: eine schematische Ansicht eines Fräskopfes;
- Fig. 2: eine schematische Ansicht eines weiteren Fräskopfes;
- Fig. 3: eine schematische Ansicht eines Fräskopfes in einer Fräskammer;
- Fig. 4: eine weitere schematische Ansicht eines Fräskopfes in einer Fräskammer;
- Fig. 5: eine perspektivische Ansicht der Fräskammer;
- Fig. 6: eine perspektivische Ansicht einer Lufteinlassströmung in die Fräskammer; und
- Fig. 7: ein Blockdiagramm eines Verfahrens zum Reinigen eines Dentalobjektes.

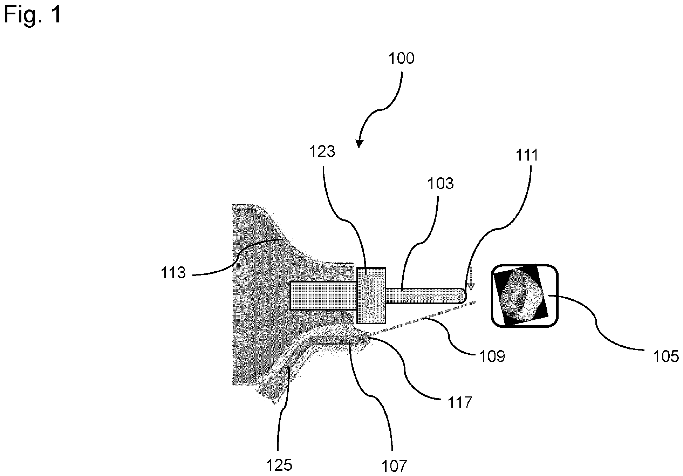

Fig. 1 zeigt eine schematische Ansicht eines Fräskopfes 100. An dem Fräskopf 100 ist möglichst nahe zur Spitze 111 des Werkzeugs 103 eine Luftdüse 107 angeordnet, die über einen Luftkanal mit Druckluft versorgt wird und einen Luftstrahl 109 auf oder vor die Spitze 111 des Werkzeugs 103 richtet.

Die Luftdüse 107 ist an einer Schutzkappe 113 an dem Fräskopf 100 angeordnet. Die Schutzkappe 113 dient dazu, den Luftstrahl 109 möglichst nahe und ohne Verwirbelungen an die Spitze 111 des Werkzeugs 103 zu führen. Zu diesem Zweck ist die Luftdüse 107 an der Schutzkappe 113 angebracht, die um die Drehspindel 123 des Fräskopfes 100 herum angeordnet ist. Die Schutzkappe 113 dient dadurch sowohl zum Spindelschutz als auch zur Luftstromführung.

An der Außenseite der Schutzkappe 113 befindet sich ein Luftkanal 125, der sich bis zum Rand der Schutzkappe 113 erstreckt und an dessen Ende sich die Luftdüse 107 befindet. Über den Luftkanal 125 wird die Luftdüse 107 mit Druckluft versorgt. Dadurch entsteht der Luftstrahl 109, der auf oder vor die Spitze 111 des Werkzeugs 103 gerichtet ist. Der Luftkanal 125 ist integral in der Wandung der Schutzkappe 113 gebildet.

Der Luftstrahl 109 kann dabei pulsierend oder kontinuierlich betrieben werden oder mit mehreren Luftdüsen 107 aus verschiedenen Richtungen auf die Spitze 111 des Werkzeugs 103 gerichtet werden. Der Luftstrahl wird während des Fräsens des Werkstücks 105 zum Dentalobjekt geführt.

Wenn der Luftstrahl 109 vor die Spitze 111 zwischen Werkzeug 103 und Dentalobjekt 105 und nicht wie das Kühlwasser auf den Werkzeugschaft gerichtet ist, verbessert sich die Reinigungswirkung. Der Luftstrahl wird beispielsweise mit einem Druck zwischen 1 und 2 Bar, zwischen 3 und 4 Bar oder zwischen 5 und 6 Bar ausgeblasen. Je höher der Druck ist, desto größer ist die Reinigungswirkung. Niedrigere Drücke lassen sich demgegenüber mit geringerer Energie erzeugen und leichter handhaben.

Das Dentalobjekt 105 ist beispielsweise eine dentale Restauration, eine Krone, eine Brücke, ein Veneer, ein Abutment, ein Inlay oder ein Onlay.

Nach einem Beenden des Fräsprozesses kann ein kontinuierlicher und/oder pulsierender Luftstrahl 109 erzeugt werden, der aus dem Fräskopf 100 austritt. Der Luftstrahl 109 wird dann über das Dentalobjekt 105 geführt, ohne dass aktive Werkzeuge erforderlich sind.

Anhand von dreidimensionalen Daten kann der Fräskopf 100 mit einem inaktiven Werkzeug entlang der Geometrie des Dentalobjekts 105 geführt werden. Der Luftstrahl wird nach der Bearbeitung des Werkstücks, d.h. nach Fertigstellung des Dentalobjekts 105, nochmals zur Reinigung betrieben.

Bei diesem Abfahren der Kontur wird das Dentalobjekt 105 durch den kontinuierlichen und/oder pulsierenden Luftstrahl gereinigt. Der Fräskopf 100 mit dem Luftstrom 109 kann beispielsweise zu einer Kavität oder Vertiefungen verfahren werden, um mit einem Bewegungssystem mit drei, vier oder fünf Achsen den gewünschten Effekt zu erzielen. Der Fräskopf kann allerdings auch fest angeordnet sein. Dadurch wird eine hohe Reinigung des Dentalobjekts 105 erzielt, wie beispielsweise an den Vertiefungen, Ecken und Kanten.

Der Luftauslass 117 der Luftdüse 107 ist optional maximal 70 mm von der Spitze 111 des Werkzeugs 103 entfernt. Wenn der Luftauslass 117 der Luftdüse 107 nahe an der Spitze 111 des Werkzeugs 103 ist, entsteht eine laminare Strömung und die Reinigungswirkung des Luftstrahls verbessert sich. Je nach Spindelgeometrie können die Luftdüsen 107 unterschiedlich positioniert sein.

Der Luftstrahl 109 wird über eine Mündung erzeugt, die im Durchmesser an der kleinsten Stelle kleiner als 2 mm ist. Der Winkel zwischen Luftstrahl 109 und Werkzeug 103 sollte möglichst gering sein, sodass der Luftstrahl 109 auch bei unterschiedlichen Werkzeuglängen möglichst nahe auf die Spitze 111 des Werkzeugs 103 trifft. Der laminare Luftstrahl 109 wird erst beim Auftreffen auf den Kontaktpunkt zwischen Werkzeug 103 und dem Werkstück verwirbelt, aus dem das Dentalobjekt 105 hergestellt wird.

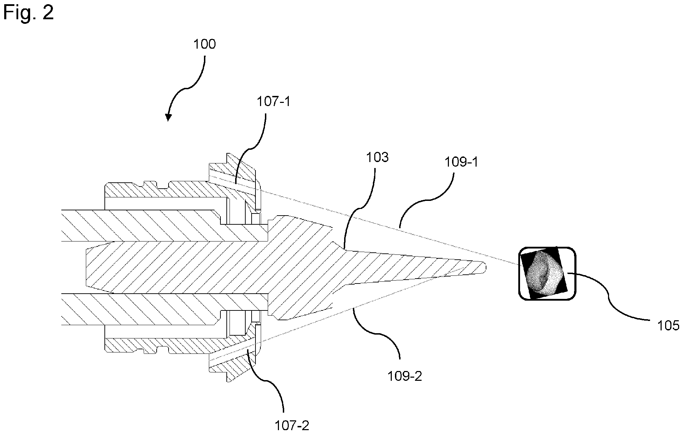

Fig. 2 zeigt eine schematische Ansicht eines weiteren Fräskopfes 100. Der Fräskopf 100 umfasst zwei Luftdüsen 107-1 und 107-2 mit unterschiedlichem Winkel in Bezug zur Rotationsachse des Fräskopfes 100. Der Luftstrom 109-1 der Luftdüse 107-1 ist vor die Spitze des Werkzeugs 103 gerichtet. Der Luftstrom 109-2 der Luftdüse 107-2 ist auf die Spitze des Werkzeugs 103 gerichtet. Durch diese Anordnung können Staubrückstände und Ablagerungen über einen großen Bereich wirksam entfernt werden.

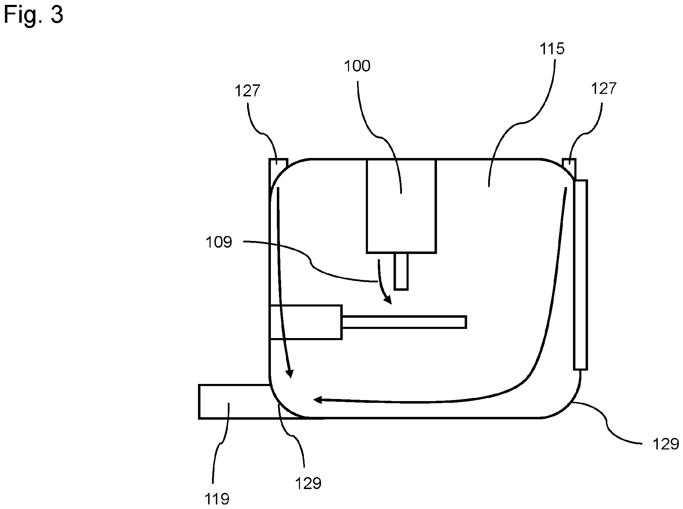

Fig. 3 zeigt eine schematische Ansicht des Fräskopfes 100 in einer Fräskammer 115. Wenn der Frässtaub bei der Entstehung verflüchtigt und abgesaugt wird, kann eine Ablagerung in der Fräskammer 115 vermieden werden. Die verwirbelte Luft wird aus der Fräskammer 115 abgesaugt, sodass sich keine Frässtaubreste ablagern können. Die Fräskammer 115 bildet bis auf die Einlass- und Auslassöffnungen einen luftdichten Innenraum.

Durch die Absaugung über Auslassöffnungen 119 in der Fräskammer 115 wird zusätzlich Luft durch die Einlassöffnungen 127 angesaugt. Die Einlassöffnungen 127 sind im oberen Bereich der Fräskammer 115 angeordnet und die Auslassöffnungen 119 sind im unteren Bereich der Fräskammer 115 angeordnet. Dadurch sind die Auslassöffnungen 119 derart angeordnet, dass die staubhaltige Luft aus der Fräskammer 115 effizient abgesaugt werden kann.

Da die Kanten und Ecken 129 der Fräskammer 115 abgerundet sind, können Bereiche vermieden werden, in denen sich der Frässtaub ablagert. Die Fräskammer 115 ist so gestaltet, dass verflüchtigte Staubteile schnell abgesaugt werden und keine Ablagerungen in strömungsarmen Ecken entstehen können. Die passive Luftansaugung erfolgt über eine Öffnung zum Kühlmittelabfluss und wird über eine Einlage in die abgerundeten Ecken und Kanten 129 der Fräskammer 115 umgeleitet.

Um strömungsfreie Ecken und Kanten 129 zu vermeiden, sind die Einlassöffnungen 127 so angeordnet, dass der erzeugte Luftstrom die Ecken, Kanten und Ablageflächen erreicht. Zu diesem Zweck sind die Ecken und Kanten abgerundet. Durch die abgerundeten Ecken und Kanten 129 entsteht ein laminarer Luftstrom ohne Verwirbelungen, der den Frässtaub effizient aus dem Inneren der Fräskammer 115 befördert. Die Lufteinlässe sind in den oberen Ecken der Fräskammer 115 angeordnet und die Absaugung der Luft erfolgt durch die Auslassöffnungen 119 an einer tiefen Position der Fräskammer 115.

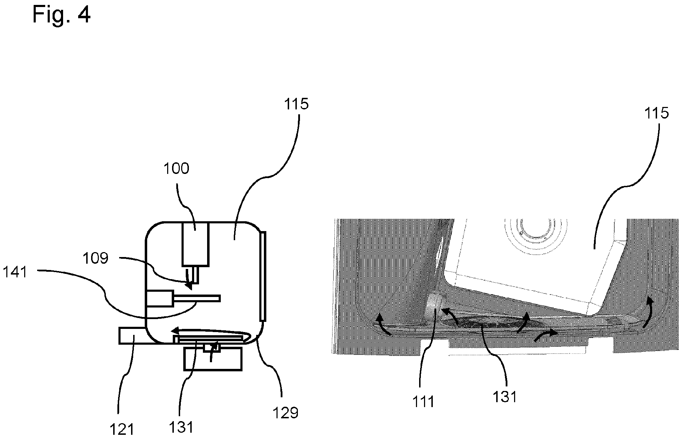

Fig. 4 zeigt eine weitere schematische Ansicht des Fräskopfes 100 in der Fräskammer 115. Der Luftstrom durch die Fräskammer 115 wird über eine Absaugung erzeugt. Die Absaugung erfolgt in einem unteren Teil, seitlich der Fräskammer 115. Das Werkstück, aus dem das Dentalobjekt 105 herausgefräst wird, wird von einem Werkstückhalter 141 gehalten.

Die Luftabsaugung erfolgt beispielsweise über eine Auslassöffnung 121 zum Kühlmittelabfluss im unteren Teil der Fräskammer 115 und wird über eine Einlage in die abgerundeten Ecken der Fräskammer 115 umgeleitet. Bei einer Luftansaugung über die Auslassöffnung 121, kann der angesaugte Luftstrom über eine Einlage in die Ecken und Kanten 129 der Fräskammer 115 umgeleitet werden, um diese staubfrei zu halten. Innerhalb der Fräskammer 115 befindet sich ein Sieb 131, das unterhalb der Spitze des Werkzeugs 103 angeordnet ist. Durch dieses Sieb 131 wird ein Luftstrom geleitet, der den nach unten sinkenden Frässtaub der Fräsbearbeitung wergtransportiert.

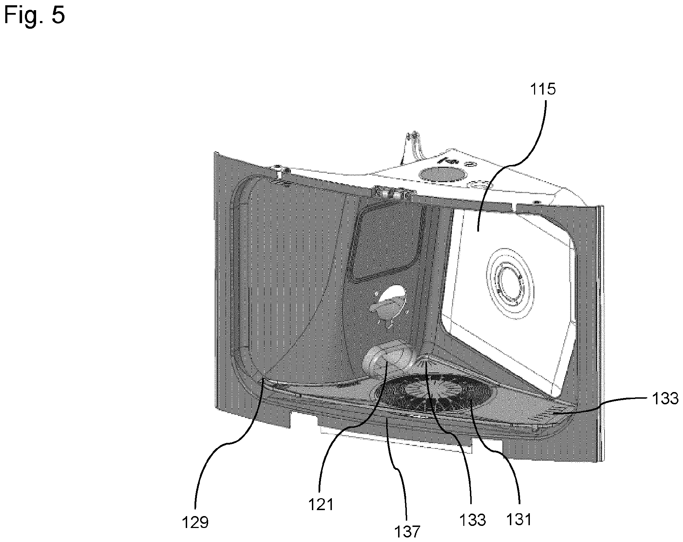

Fig. 5 zeigt eine perspektivische Ansicht der Fräskammer 115. Der Fräskopf 100 wird im Inneren der Fräskammer 115 angeordnet, so dass der Luftstrahl 109 auf oder vor die Spitze 111 des Werkzeugs 103 gerichtet ist und auf des Werkstück 105 bzw. des Dentalobjekt, das in dem Werkstückhalter 333 eingespannt ist. Die Ecken 129 der Fräskammer 115 sind abgerundet, so dass Luftverwirbelungen in den Ecken 129 verhindert werden können. Zudem sind in den Ecken 129 weitere Luftaustrittsöffnungen 133 angeordnet, mit denen ein zusätzlicher Luftstrom in den Ecken 129 erzeugt werden kann. Dadurch kann die Ablagerung von Frässtaub in den Ecken 129 noch wirksamer verhindert werden.

Die Luftaustrittsöffnungen 133 und das Sieb 131 sind in einer Bodenplatte 135 der Fräskammer 115 gebildet. Unterhalb der Bodenplatte 135 befindet sich eine Verteilerplatte 137. Zwischen der Bodenplatte 135 und der Verteilerplatte 137 entsteht ein Hohlraum, über den die Luft an die Luftaustrittsöffnungen 133 und das Sieb 131 verteilt werden kann. Die so in die Fräskammer 115 eintretende Luft wird über die Auslassöffnung 121 abgeführt und nimmt dabei den Frässtaub mit.

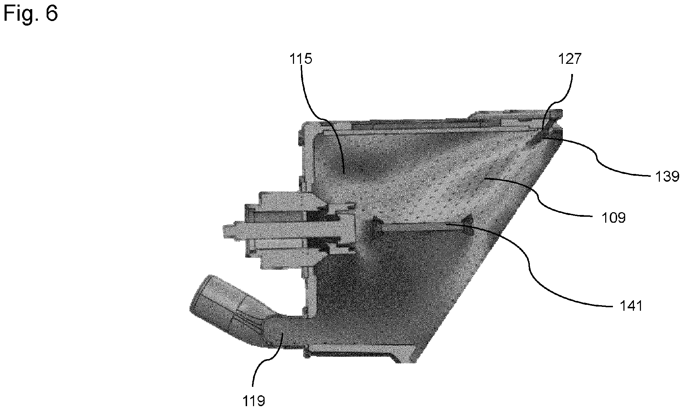

Fig. 6 zeigt eine perspektivische Ansicht einer Einlassströmung in die Fräskammer 115. Das Werkstück, aus dem das Dentalobjekt 105 herausgefräst wird, wird von einem Werkstückhalter 141 gehalten. Die Einlassströmung wird durch Ansaugen von Luft aus der Fräskammer 115 über die Auslassöffnung 119 erzeugt. Dadurch wird die Einlassströmung erzeugt, indem die Luft über die Einlassöffnung 127 in die Fräskammer 115 einritt. Die Fräskammer 115 umfasst eine Umlenkplatte 139 zum Steuern des eintretenden Luftstrahls 109, die an der Einlassöffnung 127 angeordnet ist. Durch die Umlenkplatte 139 kann der Luftstrahl 109 auf die Spitze 111 des Werkzeugs 103 oder dem Werkstückhalter 333 gerichtet werden. Die Umlenkplatte 139 ist beweglich, so dass der Luftstrahl 109 auf die Spitze 111 von Werkzeugen 103 mit unterschiedlicher Länge bzw. des Werkstückhalters 333 gerichtet werden kann. Die zugeführte Luft wird aus der Fräskammer 115 über die Auslassöffnung 119 abgeführt und entfernt dadurch den Frässtaub aus der Fräskammer 115.

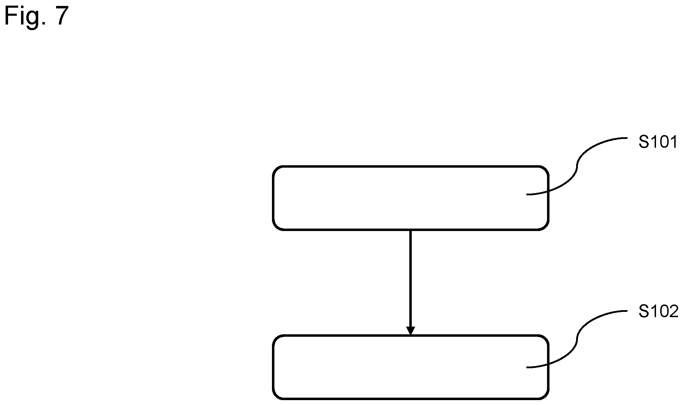

Fig. 7 zeigt ein Blockdiagramm eines Verfahrens zum Reinigen eines Dentalobjektes 105. Das Verfahren umfasst den Schritt S101 eines Fräsens des Dentalobjektes 105 mit dem Werkzeug 103. Dabei wird in Schritt S102 gleichzeitig während des Fräsens oder nach dem Fräsen der Luftstrahl 109 erzeugt, der auf oder vor eine Spitze 111 des Werkzeugs 103 gerichtet ist. Der Luftstrahl trifft vor dem Werkzeug 103 auf das Dentalobjekt 105 auf.

Wenn der Luftstrahl 109 pulsiert wird, verringert sich der Luftverbrauch bei gleichbleibender Reinigungswirkung oder es verbessert sich die Reinigungswirkung bei gleichem Luftverbrauch. Um starke Staubverwirbelungen zu vermeiden, kann auf den Luftstrahl 109 bei dem Schrubbprozess verzichtet werden.

Weil die endgültige Oberfläche des Dentalobjekts 105 erst beim Schlichten entsteht, ist es ausreichend, wenn der Luftstrahl 109 bei einer abschließenden Oberflächenbearbeitung aktiviert wird, um eine staubfreie Oberfläche zu erreichen. Staubrückstände auf dem Dentalobjekt 105 können so um 90% verringert werden. Für scheibenförmige Rohlinge entstehen beispielsweise statt einer Menge von 2.2 g an Staubrückständen nur 0.2 g an Staubrückständen. Eine Zeit für die automatische Reinigung des Dentalobjektes 105 am Ende des Fräsauftrags kann eingespart werden. Das Dentalobjekt 105 kann am Ende des Fräsprozesses in der Fräskammer 115 nochmals mit verschiedenen Luftdüsen abgeblasen werden.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Alle Verfahrensschritte können durch Vorrichtungen implementiert werden, die zum Ausführen des jeweiligen Verfahrensschrittes geeignet sind. Alle Funktionen, die von gegenständlichen Merkmalen ausgeführt werden, können ein Verfahrensschritt eines Verfahrens sein.

Der Schutzbereich der vorliegenden Erfindung ist durch die Ansprüche gegeben und wird durch die in der Beschreibung erläuterten oder den Figuren gezeigten Merkmale nicht beschränkt.

### BEZUGSZEICHENLISTE

- 100: Fräskopf
- 101: Fräsmaschine
- 103: Werkzeug
- 105: Dentalobjekt
- 107: Luftdüse
- 109: Luftstrahl
- 111: Spitze
- 113: Schutzkappe
- 115: Fräskammer
- 117: Luftauslass
- 119: Auslassöffnung
- 121: Auslassöffnung
- 123: Drehspindel
- 125: Luftkanal
- 127: Einlassöffnung
- 129: Ecke / Kante
- 131: Sieb
- 133: Luftaustrittsöffnungen
- 135: Bodenplatte
- 137: Verteilerplatte
- 139: Umlenkplatte
- 141: Werkstückhalter

## Patentansprüche

1. Fräskopf (100) für eine Fräsmaschine (101), mit:
einem Werkzeug (103) zum Fräsen eines Dentalobjektes (105); und
einer Luftdüse (107) zum Erzeugen eines Luftstrahls (109), der auf oder vor eine Spitze (111) des Werkzeugs (103) gerichtet ist.

2. Fräskopf (100) nach Anspruch 1, wobei sich die Luftdüse (107) in einem Abstand 10 mm und 70 mm zur Spitze, insbesondere zwischen 20 mm und 50 mm, zur Spitze (111) befindet.

3. Fräskopf (100) nach einem der vorangehenden Ansprüche, wobei die Luftdüse (107) an einer Schutzkappe (113) angeordnet ist, die um die Drehspindel (123) des Werkzeugs (103) herum angeordnet ist.

4. Fräskopf (100) nach einem der vorangehenden Ansprüche, wobei der Fräskopf (100) mehrere Luftdüsen (107) zum Erzeugen eines Luftstrahls (109) umfasst, der auf oder vor eine Spitze (111) des Werkzeugs (103) gerichtet ist.

5. Fräskopf (100) nach einem der vorangehenden Ansprüche, wobei der Winkel zwischen Werkzeug (103) und Luftstrahl (109) weniger als 40°, insbesondere weniger als 25° beträgt.

6. Fräskopf (100) nach einem der vorangehenden Ansprüche, wobei der Fräskopf (100) in einer Fräskammer (115) angeordnet ist.

7. Fräskopf (100) nach Anspruch 6, wobei die Fräskammer (115) abgerundete Ecken und/oder Kanten (129) aufweist.

8. Fräskopf (100) nach Anspruch 6 oder 7, wobei die Fräskammer (115) zumindest eine Einlassöffnung (127) für Luft und/oder einer Umlenkplatte (139) zum Steuern der Luft und/oder eine Auslassöffnung (119) zum Absaugen von Luft umfasst, die an einem oder nahe zum Boden der Fräskammer (115) angeordnet ist.

9. Fräskammer (115) mit einem Fräskopf (100) nach einem der Ansprüche 1 bis 8.

10. Verfahren zum Reinigen eines Dentalobjektes (105), mit den Schritten:
- Fräsen (S101) eines Dentalobjektes (105) mit einem Werkzeug (103); und
- Erzeugen (S102) eines Luftstrahls (109), der auf oder vor eine Spitze (111) des Werkzeugs (103) gerichtet ist.

11. Verfahren nach Anspruch 10, wobei der Luftstrahl (109) kontinuierlich oder pulsierend erzeugt wird.

12. Verfahren nach einem der Ansprüche 10 oder 11, wobei Luft aus einer Fräskammer (115) abgesaugt wird, in der das Werkzeug (103) angeordnet ist.

13. Verfahren nach einem der Ansprüche 10 bis 12, wobei das Dentalobjekt (105) nach einem Beenden des Fräsens durch den Fräskopf (100) mit aktiviertem Luftstrom abgefahren wird.

14. Verfahren nach einem der Ansprüche 10 bis 13, wobei Luft aus einer Fräskammer (115) abgesaugt wird, in der das Werkzeug (103) angeordnet ist und/oder die Luft am Boden der Fräskammer (115) abgesaugt, in den Ecken (129) angesaugt und/oder über die Ecken (129) abgeführt wird.

15. Verfahren nach einem der Ansprüche 10 bis 13, wobei Luft zu der Fräskammer (115) zugeführt und/oder in den Ecken (129) ausgestoßen wird.
